# FASCICULE DE BREVET EUROPEEN

(11) **EP 3 151 277 B1**
(45) Date de publication et mention de la délivrance du brevet: **14.10.2020**
(21) Numéro de dépôt: 16154965.4
(22) Date de dépôt: 10.02.2016
(51) Int. Cl.: H01L 23/58, G01R 31/28, G06F 21/62

(54) **CIRCUIT INTÉGRÉ SÉCURISÉ**
GESICHERTER INTEGRIERTER SCHALTKREIS
SECURE INTEGRATED CIRCUIT

(30) Priorité: 30.09.2015 FR 1559292
(43) Date de publication de la demande: 05.04.2017
(73) Titulaire: STMICROELECTRONICS (ROUSSET) SAS, 13790 Rousset (FR)
(72) Inventeur: LISART, Mathieu, 13100 AIX EN PROVENCE (FR); BORREL, Nicolas, 13500 MARTIGUES (FR)
(74) Mandataire: Cabinet Beaumont

(56) Documents cités:
- FR-A1- 2 986 356
- FR-A1- 2 998 419
- US-A1- 2015 214 163

## Description

### Domaine

La présente demande concerne les circuits électroniques intégrés, plus particulièrement un circuit intégré protégé contre des attaques effectuées depuis la face arrière du circuit.

### Exposé de l'art antérieur

Des circuits intégrés subissent parfois des attaques de pirates visant à déterminer la structure du circuit, à en modifier le fonctionnement ou à en extraire des informations confidentielles. Une attaque peut être effectuée depuis la face arrière d'un circuit muni en face avant de pistes conductrices et de composants tels que des condensateurs, des diodes ou des transistors. Au cours de l'attaque, une portion de la face arrière est d'abord gravée. A partir de cette portion gravée, des cavités de quelques microns de largeur sont réalisées par exemple par un faisceau d'ions et s'étendent vers la face avant jusqu'au niveau des composants ou des pistes conductrices. Des contacts électriques avec les composants ou les pistes sont ensuite créés dans ces cavités, et les pirates utilisent ces contacts pour analyser le circuit en fonctionnement.

Il est souhaitable de disposer de circuits intégrés protégés contre ce type d'attaque, les dispositifs connus présentant divers inconvénients et problèmes de réalisation. Le document US2015/214163 décrit une puce électronique et un procédé de détection d'une attaque de la puce.

### Résumé

Un circuit intégré selon l'invention est défini dans la revendication 1. Des caractéristiques avantageuses de l'invention sont définies dans les revendications dépendantes.

### Brève description des dessins

Les caractéristiques et avantages de l'invention seront exposés en détail dans la description suivante en relation avec les figures jointes parmi lesquelles :
la figure 1A est une vue de dessus, partielle et schématique, d'un exemple de circuit intégré ;
la figure 1B est une vue en coupe, partielle et schématique, du circuit intégré représenté en figure 1A ;
la figure 1C reprend la vue de dessus de la figure 1A, simplifiée et à une échelle différente ;
les figures 2A et 2B illustrent une attaque du circuit représenté en figure 1A ;
la figure 3A est une vue de dessus, partielle et schématique, d'un exemple, utile à la compréhension de l'invention, d'un circuit intégré protégé contre des attaques ;
la figure 3B représente une bande du circuit intégré illustré en figure 3A connectée à un circuit de détection ;
la figure 4 reprend la vue de dessus de la figure 3A, à une échelle différente ;
la figure 5 reprend la vue schématique de la figure 3B et détaille un exemple de circuit de détection ;
la figure 6 représente deux bandes du circuit intégré illustré en figure 3A connectées à un mode de réalisation du circuit de détection selon l'invention; et
la figure 7 est une vue en coupe, partielle et schématique, d'un autre type de circuit intégré susceptible d'être protégé contre des attaques.

### Description détaillée

De mêmes éléments ont été désignés par de mêmes références aux différentes figures et, de plus, les diverses figures ne sont pas tracées à l'échelle. Par souci de clarté, seuls les éléments utiles à la compréhension des modes de réalisation décrits ont été représentés et sont détaillés.

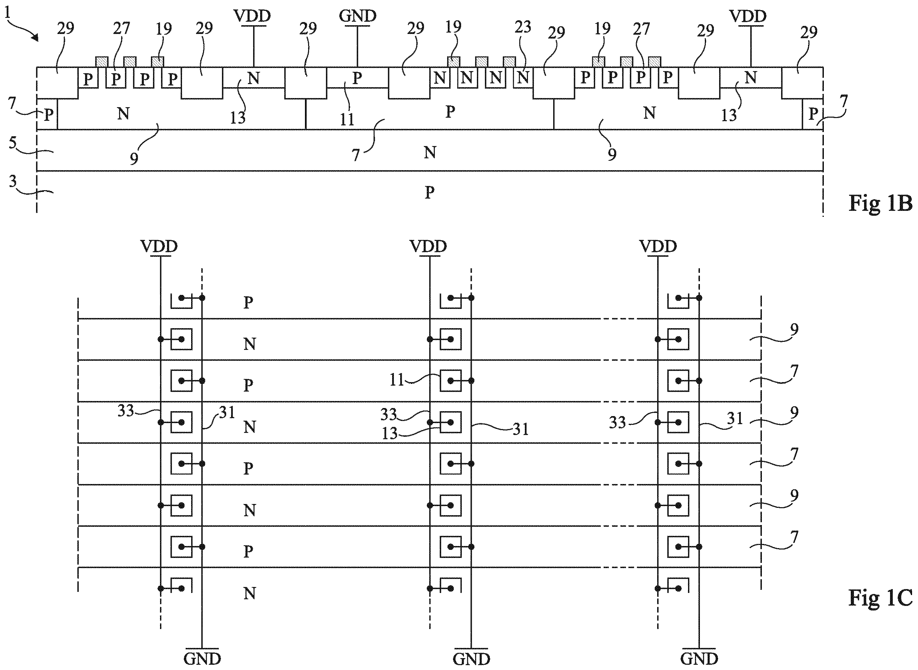

Dans la description qui suit, lorsque l'on fait référence à des qualificatifs de position relative, tels que les termes "supérieur", "inférieur", etc., il est fait référence à l'orientation de l'élément concerné dans les figures 1B, 2A et 7.

Dans la présente description, le terme "connecté" désigne une connexion électrique directe entre deux éléments, tandis que le terme "couplé" désigne une connexion électrique entre deux éléments qui peut être directe ou par l'intermédiaire d'un ou de plusieurs autres composants passifs ou actifs, comme des résistances, des condensateurs, des inductances, des diodes, des transistors, etc.

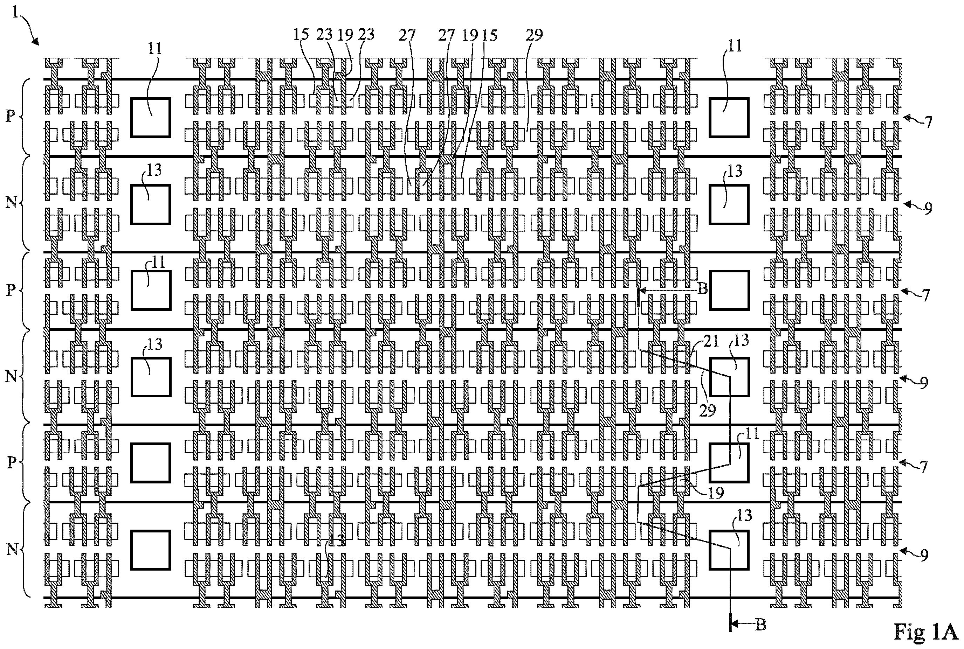

La figure 1A est une vue de dessus schématique et partielle d'un exemple de circuit intégré 1. La figure 1B est une vue schématique en coupe du circuit intégré 1 selon une ligne brisée B-B représentée en figure 1A.

Le circuit intégré 1 comprend un support semiconducteur 3, par exemple une plaquette de silicium dopé de type P. Une région 5 dopée de type N, par exemple une couche enterrée, recouvre une partie de la surface du support 3. Des caissons 7 dopés de type P et des caissons 9 dopés de type N disposés en bandes alternées contiguës s'étendent sur la région 5.

Des contacts de polarisation 11 sont formés à intervalles réguliers dans la partie supérieure de chaque caisson, ou bande, 7 et des contacts de polarisation 13 sont formés de même dans la partie supérieure de chaque caisson, ou bande, 9. Dans l'exemple représenté, les contacts 11 et 13 vus de dessus sont disposés aux intersections entre des lignes orthogonales à la direction des bandes 7 et 9 et les axes médians des bandes. Chacun des contacts 11 et 13 correspond à une zone dopée du même type que la bande associée, avec un niveau de dopage supérieur.

De nombreux transistors du type MOS sont formés dans et sur la partie supérieure de chacune des bandes 7 et 9 entre des contacts respectifs 11 ou 13. Ces transistors sont groupés par trois ou quatre dans des zones actives 15. Chaque transistor comporte une grille 19 éventuellement commune à plusieurs transistors, disposée entre des zones de drain et de source 23 pour les transistors à canal P et 27 pour les transistors à canal N. Des tranchées d'isolement 29 s'étendent à partir de parties de la surface supérieure des bandes pour délimiter les zones actives.

En vue de dessus, la ligne brisée B-B traverse successivement une bande 9 dopée de type N, une bande 7 dopée de type P, et une autre bande 9 dopée de type N, et traverse dans chacune de ces bandes une zone active et un contact de polarisation.

Comme l'illustre la figure 1B, un potentiel de référence, par exemple une masse GND, est appliqué sur chaque contact de polarisation 11, et un potentiel VDD supérieur au potentiel de la masse est appliqué sur chaque contact de polarisation 13. De cette manière, chaque bande 7 dopée de type P est polarisée au potentiel GND, et chaque bande 9 dopée de type N est polarisée au potentiel VDD.

La figure 1C reprend la vue de dessus de la figure 1A, de façon simplifiée et à une échelle différente. Les transistors ne sont pas représentés. Les bandes 7 et 9 munies de contacts de polarisation 11 et 13 sont visibles, ainsi que des liaisons 31 entre les contacts 11 et la masse et des liaisons 33 appliquant le potentiel VDD aux contacts 13.

La longueur de chaque bande est par exemple comprise entre 100 µm et 1 mm. La largeur de chaque bande est par exemple inférieure à 2,5 µm. Dans chaque bande 7 ou 9, le nombre de contacts de polarisation 11, ou le nombre de contacts de polarisation 13, peut être compris entre 5 et 100. Le nombre de bandes 7, ou le nombre de bandes 9, est par exemple compris entre 20 et 200.

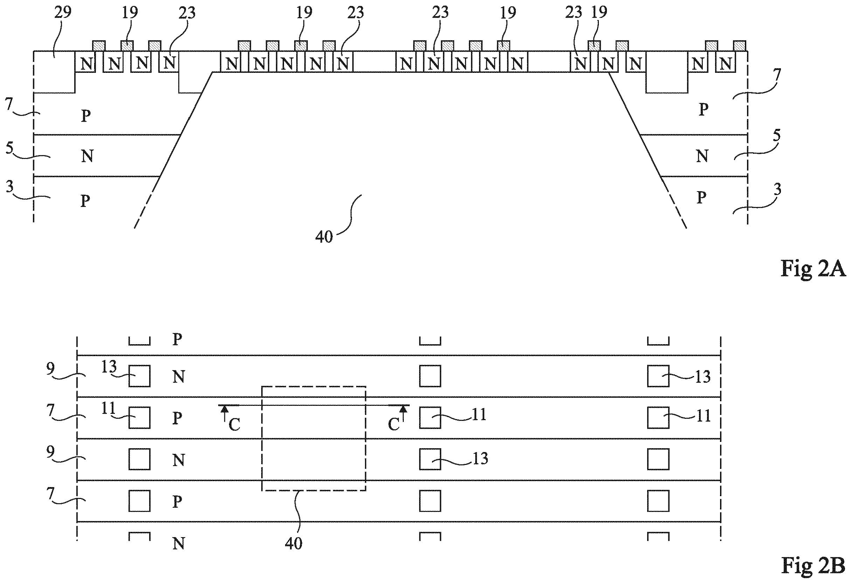

Les figures 2A et 2B représentent le circuit intégré 1 décrit précédemment, alors qu'un pirate a percé une cavité de la largeur d'au moins deux bandes à partir de la face arrière pour préparer une attaque. La figure 2A est une vue en coupe partielle selon un segment C-C représenté en figure 2B. La figure 2B est une vue de dessus correspondant à la figure 1C.

En figures 2A et 2B, une cavité 40 a été creusée par un pirate à partir de la face arrière à travers le support 3, la région 5, et la largeur d'une bande 7 de type P. La cavité s'étend par exemple jusqu'au niveau inférieur des zones de drain et de source 23. La partie inférieure de la bande 7 de type P dépourvue de tranchées d'isolement et de zones de drain et de source est interrompue par la cavité 40.

On cherche ici à détecter la présence de telles cavités, de façon à empêcher un pirate d'obtenir des informations par le biais de contacts créés dans ces cavités.

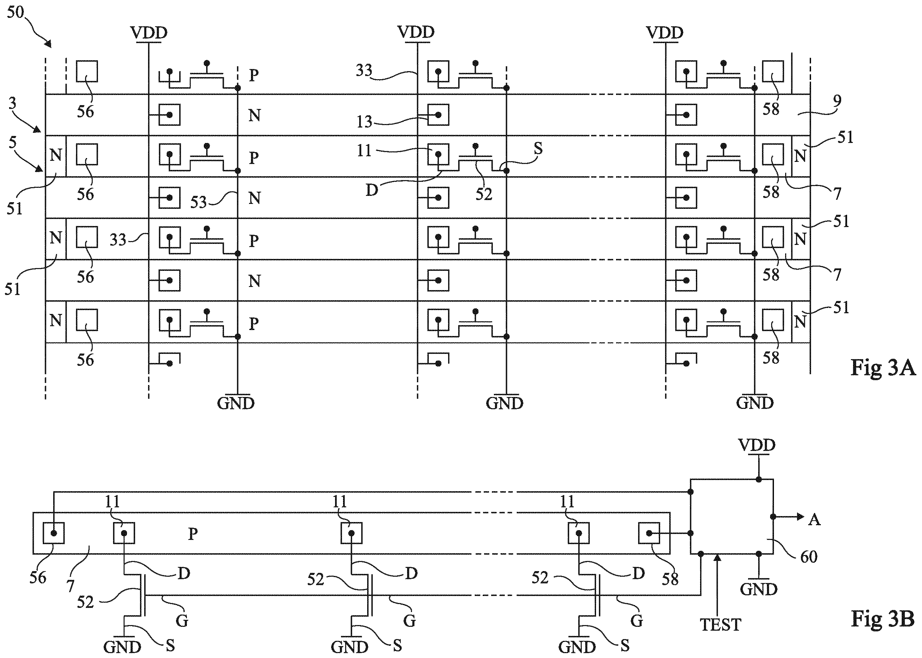

La figure 3A est une vue de dessus, partielle et schématique, d'un exemple, utile à la compréhension de l'invention, d'un circuit intégré 50 protégé contre des attaques. Le circuit intégré 50 comprend des éléments ayant des rôles identiques à ceux du circuit intégré 1 des figures 1A à 1C, désignés par de mêmes références. Ainsi, le circuit intégré 50 comprend :
- un support semiconducteur 3 dopé de type P ;
- une région 5 dopée de type N qui s'étend sur le support 3, par exemple une couche enterrée ;
- des caissons 7 dopés de type P et des caissons 9 dopés de type N disposés en bandes alternées sur la région 5 et munis de contacts de polarisation respectifs 11 et 13 ; et
- des connexions 33 appliquant le potentiel VDD sur les contacts de polarisation 13.

Des transistors non représentés sont formés dans et sur les bandes 7 et 9. On notera qu'à chaque extrémité de chaque bande 7, des régions de type N 51, en contact avec la région 5 et avec les bandes N 9, isolent chaque bande P 7 des autres bandes 7 et du support 3.

Le circuit intégré 50 comprend en outre :
- pour chaque contact 11, un transistor MOS à canal N 52 ;
- des contacts 56, 58 aux extrémités de chaque bande 7 ; et
- des circuits de détection.

La figure 3B représente en vue de dessus une bande 7 connectée à un circuit de détection 60. La bande 7 est représentée schématiquement en vue de dessus, munie des contacts 11, 56 et 58.

Chaque contact de polarisation 11 est couplé au drain D d'un transistor 52. Les sources S des transistors 52 sont couplées à la masse GND. Les grilles des transistors 52 associés à une même bande 7 sont interconnectées. Le circuit de détection 60 est couplé aux grilles et commande l'ensemble des interrupteurs d'une même bande 7, et commande ainsi l'application du potentiel de polarisation GND sur l'ensemble de la bande 7.

Les contacts 56 et 58 sont des contacts destinés à la détection de la présence éventuelle de cavités pirates. Les contacts de détection 56 et 58 sont couplés au circuit de détection 60. Le circuit de détection 60 est alimenté entre les potentiels VDD et la masse GND.

Chaque circuit de détection 60 est apte à recevoir un signal de test TEST et à produire un signal d'alerte A. En fonctionnement, des phases de test sont prévues au cours desquelles les signaux TEST sont activés successivement par un circuit non représenté, un seul signal étant activé à la fois. Lorsque le signal de test d'un circuit de détection est activé, le circuit de détection ouvre les transistors 52, et le potentiel de polarisation GND n'est plus appliqué à la bande 7 associée. Le circuit de détection 60 compare alors la résistance électrique entre les contacts 56 et 58 à un seuil, et active le signal d'alerte si cette résistance électrique est supérieure au seuil. Le seuil peut correspondre à la résistance maximum que présente normalement la bande 7 entre les contacts 56 et 58 en l'absence de cavité pirate.

Lorsqu'une cavité a été creusée par un pirate et interrompt totalement ou partiellement une bande 7 dopée de type P, la résistance électrique entre les contacts 56 et 58 de cette bande augmente fortement. Le circuit de détection associé génère alors un signal d'alerte permettant de détecter cette tentative d'attaque et de prendre des contre-mesures comme stopper le circuit intégré ou détruire des informations confidentielles présentes sur le circuit.

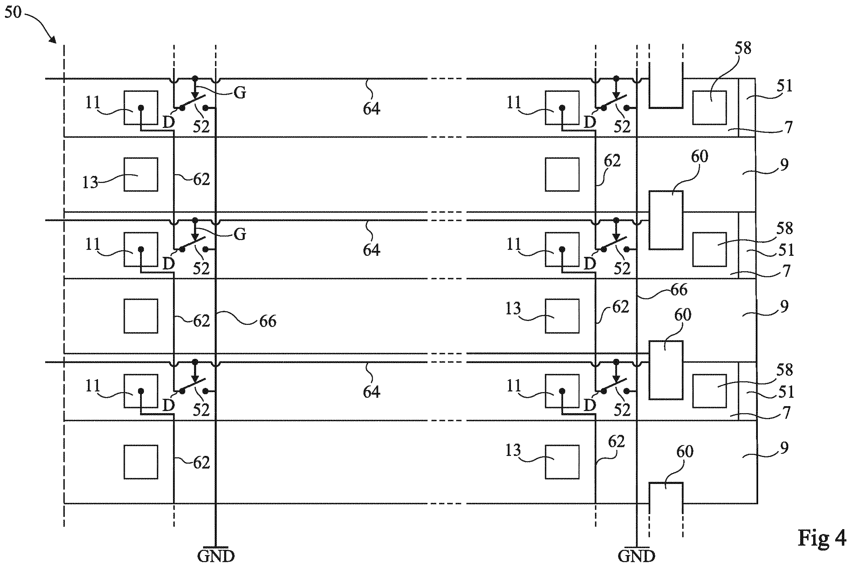

La figure 4 reprend la vue de dessus de la figure 3A, à une échelle différente, et détaille un exemple de mise en oeuvre des transistors 52 du circuit intégré 50 décrit en relation avec les figures 3A et 3B. Des bandes 7 et 9 sont visibles en figure 4, ainsi que les contacts de polarisation 11 et 13. Chaque transistor 52 est représenté sous forme d'un interrupteur. Pour chaque bande 7, des liaisons 62 connectent chaque contact 11 au drain D associé, et une liaison 64 connecte les grilles G entre elles et au circuit de détection 60. Des liaisons 66 connectent les sources des transistors 52 à la masse GND.

Comme cela est illustré en figure 4, pour chaque bande 7, les transistors 52 associés sont formés dans et sur une autre bande 7 voisine. Pour chaque bande 7, le circuit de détection 60 est formé dans et sur cette autre bande 7 voisine et une bande 9 voisine.

Ainsi, pendant le test d'une bande 7, les transistors 52 associés sont situés dans une bande correctement polarisée. Ceci permet d'assurer le bon fonctionnement des transistors 52. De même, des transistors MOS compris dans le circuit de détection 60 sont dans et sur une bande correctement polarisée.

A titre de variante, chacun des transistors 52 associés à une bande 7 peut être situé dans n'importe quelle autre bande 7, l'important étant que ces deux bandes 7 ne soient pas testées en même temps. De même, les transistors MOS du circuit de détection 60 associés à une bande 7 peuvent être situés dans n'importe quelle partie du circuit intégré restant correctement polarisée en cours de test, afin d'assurer le bon fonctionnement du circuit de détection.

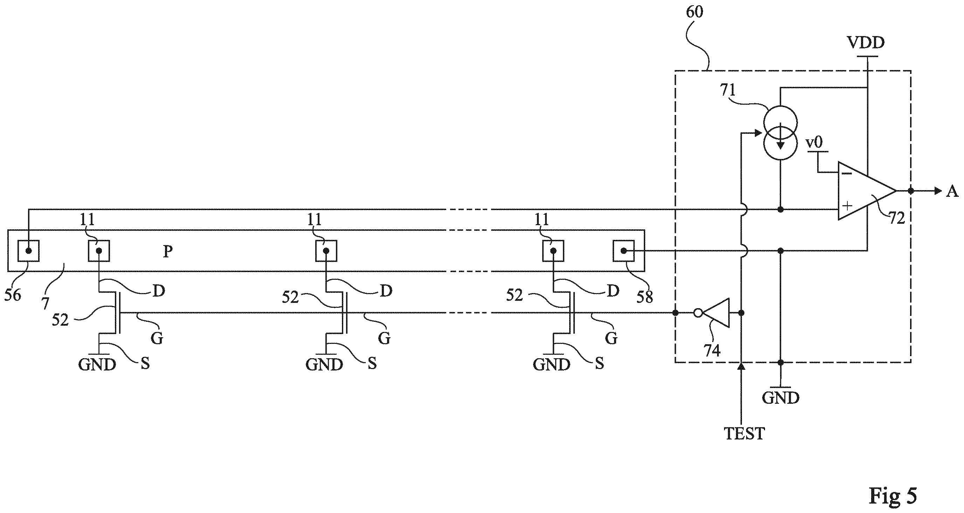

La figure 5 reprend la vue schématique de la figure 3B, et détaille un exemple de circuit de détection 60. Le circuit de détection 60 comprend une source de courant 71, un comparateur 72 alimenté par la tension entre le potentiel VDD et la masse GND, et un inverseur 74 recevant le signal TEST. Le contact de détection 58 de la bande 7 est connecté à la masse GND. Le comparateur 72 compare le potentiel sur le contact de détection 56 avec un potentiel V0.

Lorsque le signal TEST est désactivé, l'inverseur 74 maintient les transistors 52 à l'état passant et le signal d'alerte A est désactivé. Lorsque le signal TEST est activé, les transistors 52 sont à l'état ouvert. La source de courant 71 injecte alors un courant dans le contact de détection 56, et le potentiel sur l'entrée positive du comparateur 72 est proportionnel à la résistance de la bande 7 entre les contacts 56 et 58. Lorsque la bande 7 est interrompue partiellement ou en totalité par une cavité pirate, cette résistance est anormalement élevée et le signal d'alerte A est activé. A titre d'exemple, la tension V0 est comprise entre 300 et 500 mV.

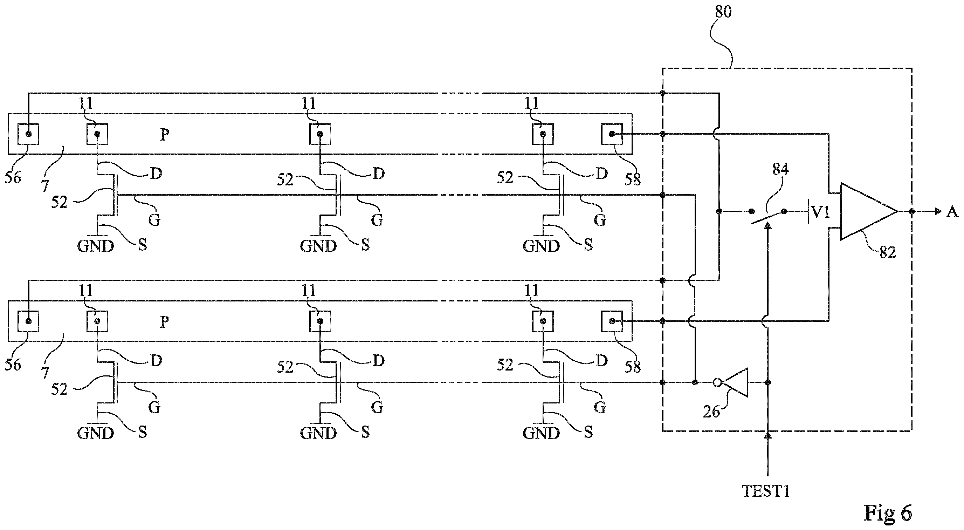

La figure 6 illustre la présente invention et représente deux des bandes 7 du circuit intégré 50 illustré précédemment en figures 3A et 3B, connectées à un circuit de détection 80 remplaçant deux circuits de détection 60. On comprendra que ces bandes de type P 7 sont séparées par des bandes 7 et 9 non représentées.

Pour chacune des deux bandes 7, les grilles G des transistors 52 associés sont couplées ensemble au circuit de détection 80, et les contacts de détection 56 et 58 sont couplés au circuit 80. Le circuit 80 est adapté à recevoir un signal de test TEST1 et à produire un signal d'alerte A. Le circuit de détection 80 comprend un circuit de comparaison 82, un interrupteur 84 et un inverseur 86.

Lorsque le signal TEST1 est activé, l'inverseur 86 ouvre les transistors 52 associés aux deux bandes 7 et l'interrupteur 84 applique un potentiel positif V1 sur les contacts de détection 56 des deux bandes 7. Le circuit de détection 80 compare alors les potentiels des contacts de détection 58. Si une cavité pirate endommage l'une ou l'autre des deux bandes 7, le circuit de détection 80 produit un signal d'alerte lorsque les résistances entre les contacts de détection 56 et 58 des deux bandes 7 diffèrent par exemple de plus de 10 %. A titre d'exemple, la tension V1 est comprise entre 300 et 500 mV.

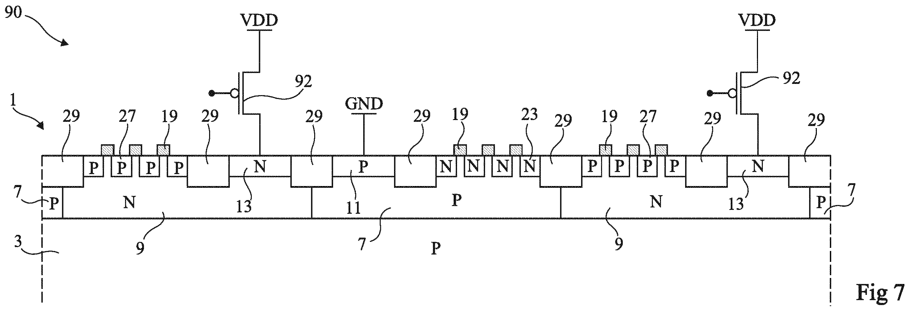

La figure 7 est une vue en coupe d'un autre type de circuit intégré susceptible d'être protégé contre des attaques. Le circuit intégré 90 comprend les mêmes éléments que le circuit intégré 50, à l'exception de la couche enterrée 5. Chacune des bandes N 9 est isolée des autres bandes 9 par le support 3 et les bandes P 7.

Les contacts de polarisation 11 des bandes P 7 sont connectés à la masse. Pour chacun des contacts de polarisation 13 des bandes N 9, le potentiel VDD est appliqué sur la source d'un transistor MOS à canal P 92 dont le drain est couplé au contact 13. Les transistors 92 associés à une bande 9 peuvent être formés dans et sur une autre bande 9.

Les grilles de tous les transistors 92 de chacune des bandes 9 peuvent être couplées à un circuit de détection adapté à ouvrir les transistors 92 et à activer une alarme en fonction de la résistance entre deux contacts de détection disposés aux extrémités de la bande 9.

Dans le mode de réalisation selon l'invention et les exemples décrits précédemment, la surface du circuit intégré dédiée à la détection de cavités pirates est limitée à un transistor pour chacun des nombreux contacts de polarisation et à un circuit de détection par bande. Les circuits de détection sont simples et il peut y avoir jusqu'à 100 contacts de polarisation pour chaque bande. Ainsi, la surface totale dédiée à la protection peut avantageusement représenter moins de 1 % de la surface du circuit intégré.

Un mode de réalisation selon l'invention et des exemples particuliers ont été décrits. Diverses variantes et modifications apparaîtront à l'homme de l'art. En particulier, bien que les circuits intégrés décrits soient formés à partir d'un support de silicium, d'autres supports semiconducteurs peuvent être utilisés.

En outre, bien que, dans le mode de réalisation selon l'invention et les exemples décrits, le support soit en un semiconducteur dopé de type P, le support peut également être en un semiconducteur dopé de type N, les types de dopages des autres parties du circuit intégré étant alors échangés et le potentiel VDD étant alors inférieur au potentiel GND.

Bien que, dans le mode de réalisation selon l'invention et les exemples décrits, le potentiel de polarisation GND ou VDD soit appliqué sur les contacts de polarisation par des transistors du type MOS, d'autres types d'interrupteurs peuvent être utilisés, par exemple des transistors bipolaires.

Un mode de réalisation selon l'invention et des exemples avec diverses variantes ont été décrits ci-dessus. On notera que l'homme de l'art peut combiner divers éléments de ces divers modes de réalisation et variantes sans faire preuve d'activité inventive. En particulier, il est possible de réaliser un circuit intégré combinant des bandes 7 équipées de circuits de détection 60 et d'autres bandes 7 équipées de circuits de détection 80.

## Revendications

1. Circuit intégré comportant une pluralité de premières bandes semiconductrices (7 ; 9) d'un premier type de conductivité et une pluralité de deuxièmes bandes semiconductrices (9 ; 7) d'un deuxième type de conductivité disposées de manière alternée et contiguë sur une région (5 ; 3) du deuxième type de conductivité, comprenant :
une pluralité de contacts de polarisation (11 ; 13) pour chacune des premières bandes ;
pour chaque contact de polarisation, un interrupteur (52 ; 92) adapté à appliquer un potentiel (GND ; VDD) sur le contact de polarisation ;
deux contacts de détection (56, 58) disposés aux extrémités de chacune des premières bandes ; et
un circuit de détection (80) commun à deux bandes parmi les premières bandes, lesdites deux bandes étant séparées par d'autres bandes parmi les premières et deuxièmes bandes, l'activation du circuit de détection provoquant l'ouverture des interrupteurs associés auxdites deux bandes et la comparaison à un seuil de la résistance entre les contacts de détection de l'une desdites deux bandes, ledit seuil correspondant à la résistance entre les contacts de détection de l'autre desdites deux bandes.

2. Circuit intégré selon la revendication 1, dans lequel le seuil correspond à la résistance normale d'une première bande (7) entre les contacts de détection en l'absence de cavité pirate.

3. Circuit intégré selon la revendication 1 ou 2, dans lequel le circuit de détection (80) applique un potentiel positif (V1) sur l'un des contacts de détection (56) de chacune des deux premières bandes associées.

4. Circuit intégré selon l'une quelconque des revendications 1 à 3, dans lequel pour chaque première bande (7 ; 9), les interrupteurs (52 ; 92) sont des transistors MOS formés dans et sur une première bande voisine de ladite première bande.

5. Circuit intégré selon l'une quelconque des revendications 1 à 4, dans lequel le circuit de détection (80) associé à deux premières bandes comprend, pour chaque première bande associée, des transistors du type MOS formés dans et sur une première bande voisine de ladite première bande.

6. Circuit intégré selon la revendication 3, dans lequel le circuit de détection (80) est adapté à appliquer une tension comprise entre 300 et 500 mV entre les deux contacts de détection de chacune des deux premières bandes associées.

7. Circuit intégré selon l'une quelconque des revendications 1 à 6, dans lequel la largeur des premières bandes (7 ; 9) et des deuxièmes bandes (9 ; 7) est inférieure à 2,5 µm et leur longueur est supérieure à 100 µm.

8. Circuit intégré selon l'une quelconque des revendications 1 à 7, dans lequel ledit circuit de détection (80) est un premier circuit de détection, ledit circuit intégré incluant en outre un second circuit de détection (80) commun à deux autres premières bandes parmi les premières bandes et par ailleurs identique audit premier circuit de détection, les premier et second circuits de détection étant activés successivement, (80) un seul circuit de détection étant activé à la fois.

## Patentansprüche

1. Integrierte Schaltung mit einer Vielzahl von ersten Halbleiterstreifen (7; 9) eines ersten Leitfähigkeitstyps und von zweiten Halbleiterstreifen (9; 7) eines zweiten Leitfähigkeitstyps, die abwechselnd und in zusammenhängender Weise auf einem Bereich (5; 3) des zweiten Leitfähigkeitstyps angeordnet sind, wobei die Schaltung Folgendes aufweist:
eine Vielzahl von Bias-Kontakten (11; 13) für jeden der ersten Streifen;
einen Schalter (52; 92) für jeden Bias-Kontakt, wobei der Schalter in der Lage ist, ein Potential (GND; VDD) an den Bias-Kontakt anzulegen;
zwei Detektierkontakte (56, 58) angeordnet an den Enden jedes ersten Streifens; und
eine Detektierschaltung (80), die zwei Streifen unter den ersten Streifen gemeinsam ist, wobei die beiden Streifen durch weitere Streifen aus ersten und zweiten Streifen getrennt sind, wobei die Aktivierung der Detektierschaltung das Ausschalten der den beiden Streifen zugeordneten Schalter und den Vergleich mit einem Schwellenwert des Widerstands zwischen den Detektierkontakten eines der beiden Streifen bewirkt, wobei der Schwellenwert dem Widerstand zwischen den Detektierkontakten des anderen der beiden Streifen entspricht.

2. Integrierte Schaltung nach Anspruch 1, wobei der Schwellenwert dem normalen Widerstand eines ersten Streifens (7) zwischen den Detektionskontakten in Abwesenheit eines Piratenhohlraums entspricht.

3. Integrierte Schaltung nach Anspruch 1 oder 2, wobei die Detektierschaltung (80) ein positives Potential (V1) an einen der Erfassungskontakte (56) jedes der beiden zugehörigen ersten Streifen anlegt.

4. Integrierte Schaltung nach einem der Ansprüche 1 bis 3, wobei für jeden ersten Streifen (7; 9) die Schalter (52; 92) MOS-Transistoren sind, die innerhalb und an einem ersten Streifen neben dem ersten Streifen ausgebildet sind.

5. Integrierte Schaltung nach einem der Ansprüche 1 bis 4, wobei die Detektierschaltung (80), die mit zwei ersten Streifen assoziiert ist, für jeden assoziierten ersten Streifen MOS-Transistoren aufweist, die innerhalb und an einem ersten Streifen neben dem besagten ersten Streifen ausgebildet sind.

6. Integrierte Schaltung nach Anspruch 3, wobei die Detektionsschaltung (80) in der Lage ist, eine Spannung im Bereich von 300 bis 500 mV zwischen den beiden Detektierkontakten von jedem der beiden assoziierten ersten Streifen (7) anzulegen.

7. Integrierte Schaltung nach einem der Ansprüche 1 bis 6, wobei die Breite der ersten Streifen (7; 9) und der zweiten Streifen (9; 7) kleiner als 2,5 µm und ihre Länge größer als 100 µm ist.

8. Integrierte Schaltung nach einem der Ansprüche 1 bis 7, wobei die Detektierschaltungen (80) eine erste Detektierschaltung ist, wobei die integrierte Schaltung ferner eine zweite Detektierschaltung (80) aufweist, die zwei weiteren ersten Streifen unter den ersten Streifen gemeinsam ist und ansonsten mit der ersten Detektierschaltung identisch ist, wobei die erste und die zweite Schaltung nacheinander aktivierbar sind, wobei jeweils eine einzige Detektierschaltung aktivierbar ist.

## Claims

1. An integrated circuit comprising a plurality of first semiconductor strips (7; 9) of a first conductivity type and of second semiconductor strips (9; 7) of a second conductivity type arranged in alternated and contiguous fashion on a region (5; 3) of the second conductivity type, comprising:
a plurality of bias contacts (11; 13) for each of the first strips;
for each bias contact, a switch (52; 92) capable of applying a potential (GND; VDD) on the bias contact;
two detection contacts (56, 58) arranged at the ends of each of said first strips; and
a detection circuit (80) common to two strips among the first strips, said two strips being separated by further strips among the first and second strips, the activation of the detection circuit causing the turning off of the switches associated to said two strips and the comparison to a threshold of the resistance between the detection contacts of one of said two strips, said threshold corresponding to the resistance between the detection contacts of the other of said two strips.

2. The integrated circuit of claim 1, wherein the threshold corresponds to the normal resistance of a first strip (7) between the detection contacts in the absence of a pirate cavity.

3. The integrated circuit of claim 1 or 2, wherein the detection circuit (80) applies a positive potential (V1) to one of the detection contacts (56) of each of the two associated first strips.

4. The integrated circuit of any of claims 1 to 3, wherein, for each first strip (7; 9), the switches (52; 92) are MOS transistors formed inside of and on a first strip next to said first strip.

5. The integrated circuit of any of claims 1 to 4, wherein the detection circuit (80) associated to two first strips comprises, for each associated first strip, MOS-type transistors formed inside of and on a first strip next to said first strip.

6. The integrated circuit of claim 3, wherein the detection circuit (80) is capable of applying a voltage in the range from 300 to 500 mV between the two detection contacts of each of the two associated first strips (7).

7. The integrated circuit of any of claims 1 to 6, wherein the width of the first strips (7; 9) and of the second strips (9; 7) is smaller than 2.5 µm and their length is greater than 100 µm.

8. The integrated circuit of any of claims 1 to 7, wherein said detection circuits (80) is a first detection circuit, said integrated circuit further comprising a second detection circuit (80) common to two further first strips among the first strips and otherwise identical to said first detection circuit, the first and second circuits being successively activated, a single detection circuit being activated at a time.
